# EUROPEAN PATENT APPLICATION

(11) **EP 2 337 339 A1**
(43) Date of publication of application: **22.06.2011**
(21) Application number: 10174642.8
(22) Date of filing: 31.08.2010
(51) Int. Cl.: H04N 5/44, H04N 5/455, H04L 12/28

(54) **Display apparatus, system, and control method thereof**

(30) Priority: 04.11.2009 KR 20090106197
(71) Applicant: Samsung Electronics Co., Ltd., 442-742 Gyeonggi-do (KR)
(72) Inventor: Kim, Ki-suk, Gyeoinggi-do (KR); Kim, Ja-yeon, Gyeonggi-do (KR)
(74) Representative: Waddington, Richard

(57) **Abstract**

Disclosed are a display apparatus, system and control method , the display apparatus including a communicating unit which performs a communication with an external tuner, and receives an intermediate frequency (IF) signal from the external tuner; an IF signal processing unit which processes th e IF signal received in the communicating unit; and a control unit which controls the IF signal processing unit to process the received IF signal to be a signal displayable on a display unit if receiving the IF signal from the external tuner.

## Description

### BACKGROUND

### Field

Exemplary embodiments relate to a display apparatus, a system and a control method thereof which provide a tuner unit by an external tuner to exclude a tuner unit, thereby becoming more slimmed.

### Description of the Related Art

Currently, in a display apparatus, in addition to how the apparatus functions, the design of the apparatus has become an important factor to a user. Accordingly, a display apparatus having a slimmed design has become an important point of differentiation in a rapidly growing market of a display apparatus of a liquid crystal display (LCD) and a light emitting diode (LED). Accordingly, a tuner unit may be mounted to an external apparatus to manufacture a slimmed display apparatus. That is, a tuner unit is mounted to an external apparatus, and if the tuner unit of the external apparatus receives a broadcasting signal, the received broadcasting signal is demodulated and modulated to be displayed in a display apparatus, and is then transmitted to the display apparatus. However, in this case, since an element for demodulating and modulating the received broadcasting signal is provided to a tuner unit provided to the external apparatus as well as the display apparatus, the element performing the same function is duplicated, and accordingly, manufacturing costs are increased.

### SUMMARY

Exemplary embodiments provide a slimmed display apparatus excluding a tuner unit, and a system and a control method thereof configured by a display apparatus and an external tuner from which a duplicated element for demodulating and modulating a broadcasting signal is excluded.

According to the present invention there is provided an apparatus and method as set forth in the appended claims. Other features of the invention will be apparent from the dependent claims, and the description which follows.

According to an aspect of the exemplary embodiments, there is provided a display apparatus including: a communicating unit which performs a communication with an external tuner, and receives an intermediate frequency (IF) signal from the external tuner; an IF signal processing unit which processes the IF signal received in the communicating unit; a display unit which displays the signal processed in the IF signal processing unit; and a control unit which controls the IF signal processing unit to process the received IF signal to be a signal displayable on the display unit if receiving the IF signal from the external tuner.

The display apparatus further includes a user input unit for selecting a channel, wherein, if a channel selecting signal is received from the user input unit, the control unit controls the communicating unit to transmit the received channel selecting signal to the external tuner, and to receive an IF signal corresponding to the transmitted channel selecting signal from the external tuner.

The IF signal which is received at the communicating unit has a signal format which is converted to correspond to a communication protocol of the communicating unit, and the IF signal processing unit further comprises a signal format converting unit which extracts the received IF signal from the format-converted signal.

The received IF signal is a digital signal, and the IF signal processing unit further comprises a digital to analog converter (DAC) which converts the digital signal into an analog signal.

The IF signal processing unit further includes an IF demodulating unit which demodulates the IF signal.

According to another exemplary embodiment there is provided a display apparatus system including: an external tuner which comprises a receiving unit which receives a broadcasting signal, an IF signal converting unit which converts a radio frequency (RF) signal of a specific channel from the received broadcasting signal into an intermediate frequency (IF) signal, and a communicating unit which performs a communication with a display apparatus and transmits the converted IF signal to the display apparatus; and a display apparatus which comprises a communicating unit which performs a communication with the external tuner and receives the IF signal from the external tuner, an IF signal processing unit which processes the IF signal received in the communicating unit, a display unit which displays the signal processed in the IF signal processing unit, and a control unit which controls the IF signal processing unit to process the received IF signal to be a signal displayable on the display unit if receiving the IF signal from the external tuner.

The external tuner further includes a digital to analog converter (DAC) which converts an analog signal into a digital signal.

The external tuner further includes a signal format converting unit converting the processed IF signal to have a signal format corresponding to a communication protocol of the communicating unit.

The external tuner further includes a user input unit for selecting a channel, and a receiving unit which receives a channel selecting signal of the user input unit.

The display apparatus further includes a user input unit for selecting a channel, and if a channel selecting signal is received from the user input unit, the control unit controls the communicating unit to transmit the received signal to the external tuner, and controls the communicating unit to receive an IF signal corresponding to the transmitted signal from the external tuner.

The IF signal received in the communicating unit of the display apparatus has a signal format which is converted to correspond to a communication protocol of the communicating unit, and the IF signal processing unit further includes a signal format converting unit which extracts an IF signal from the format-converted signal.

The IF signal received in the communicating unit of the display apparatus is a digital signal, and the IF signal processing unit further comprises a digital to analog converter (DAC) which converts a digital signal into an analog signal.

The IF signal processing unit further includes an IF demodulating unit which demodulates the IF signal.

According to another exemplary embodiment, there is provided a control method of a display apparatus, the method including: receiving an intermediate frequency (IF) signal from an external tuner in a communicating unit; processing the received IF signal in an IF signal processing unit; and displaying the processed signal on a display unit.

The control method further comprises receiving a channel selecting signal from a user input unit, and transmitting the received signal to the external tuner from the communicating unit.

The received IF signal has a signal format which is converted to correspond to a communication protocol of the communicating unit, and the processing the signal further comprises extracting an IF signal from the format-converted signal in a signal format converting unit.

The received IF signal is a digital signal, and the processing the signal further includes converting the digital signal into an analog signal in a digital to analog converter (DAC).

T h e processing th e signal further includes demodulating the IF signal in an IF demodulating unit.

### BRIEF DESCRIPTION OF THE DRAWINGS

The above and/or other aspects will become apparent and mo r e readily appreciated from th e following description of the exemplary embodiments, taken in conjunction with the accompanying drawings, in which:
FIG. 1 is a configuration block diagram of a display apparatus according to an exemplary embodiment;
FIG. 2 is a configuration block diagram of a display apparatus system according to an exemplary embodiment;
FIG. 3 is a flowchart illustrating a control operation of a display apparatus according to an exemplary embodiment; and
FIG. 4 and 5 are flowcharts illustrating a control operation of a display apparatus system according to an exemplary embodiment.

### DETAILED DESCRIPTION OF EXEMPLARY EMBODIMENTS

Below, exemplary embodiments will be described in detail with reference to accompanying drawings so as to be easily realized by a person having ordinary knowledge in the art. The present inventive concept may be embodied in various forms without being limited to the exemplary embodiments set forth herein. Descriptions of well-known parts are omitted for clarity, and like reference numerals refer to like elements throughout.

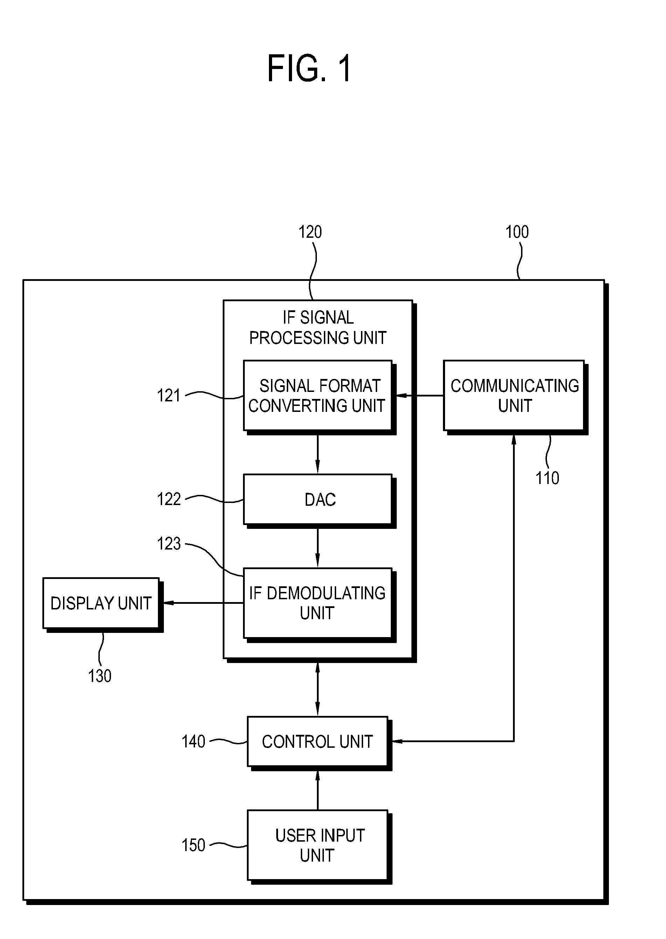

FIG. 1 is a configuration block diagram of a display apparatus according to a first exemplary embodiment.

As shown in FIG. 1, a display apparatus according to a first exemplary embodiment includes a communicating unit 110, an intermediate frequency (IF) signal processing unit 120, a display unit 130, a control unit 140 and a user input unit 150.

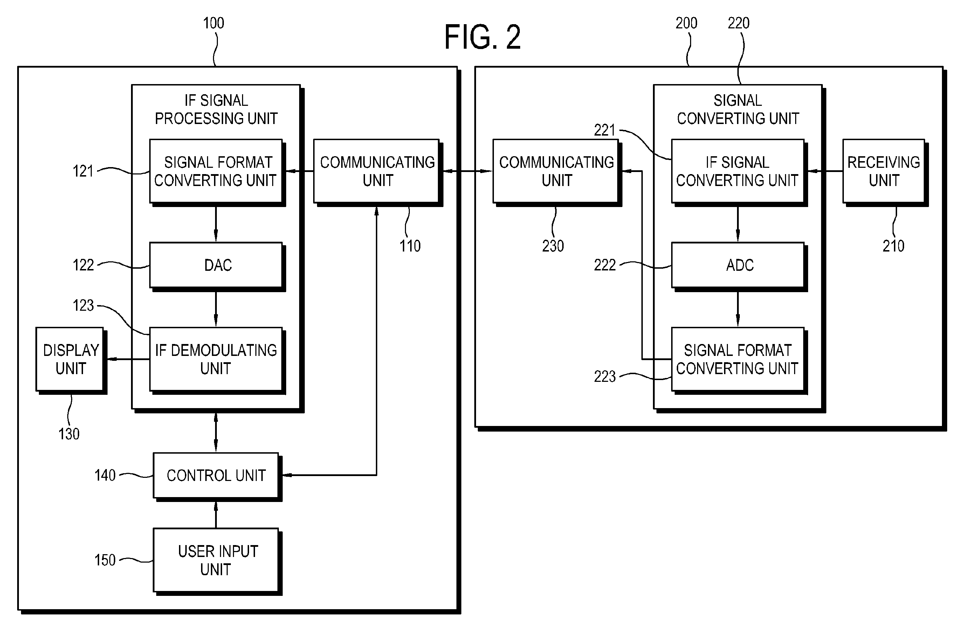

The communicating unit 110 may communicate with an external tuner (referring to 200 in FIG. 2), and may receive an IF signal from the external tuner.

The communicating unit 110 may perform wired or wireless communications with the external tuner 200. If the communicating unit 110 performs wired communication, a cable, a coaxial cable or an optical cable is connected with the external tuner 200, and a protocol corresponding to the cable, the coaxial cable or the optical cable may be included. Also, if the communicating unit 110 performs wireless communication, a wireless network communication of any type can be available as long as wireless network communication with the external tuner 200 may be performed, and a communication protocol corresponding thereto may be included. Preferably but not necessarily, the wireless network communication may perform a Wi-Fi communication as a wireless local area network (WLAN), and may include a communication protocol corresponding thereto.

Accordingly, an IF signal received from the external tuner 200 through the communicating unit 110 is a signal, a signal format of which is converted to correspond to a communication protocol capable of performing the wire communication or the wireless communication. That is, the external tuner 200 transmits to the communicating unit 110 an IF signal packetized depending on a communication protocol for performing wired or wireless communications with the communicating unit 110.

The IF signal processing unit 120 may process an IF signal received through the communicating unit 110 to be displayed in the display unit 130.

The IF signal processing unit 120 may include a signal format converting unit 121, a digital to analog converter (DAC) 122 and an IF demodulating unit 123.

As described above, the IF signal received to the communicating unit 110 is a signal, a signal format of which is converted to correspond to a communication protocol capable of performing wired or wireless communication with the external tuner 200. That is, it is an IF signal packetized in the external tuner 200.

Accordingly, the signal format converting unit 121 may extract only an IF signal from a signal, the signal format of which is converted, received to the communicating unit 110.

That is, by depacketizing a packetized IF signal received from the external tuner 200, only the IF signal is extracted.

An IF signal received to the communicating unit 110 is a digital signal. Accordingly, the DAC 122 converts an IF signal received to the communicating unit 110 from a digital signal to an analog signal. This process may be performed after the IF signal extracting process in the signal format converting unit 121.

The IF demodulating unit 123 may demodulate an IF signal. That is, the IF demodulating unit 123 may demodulate an IF signal converted into an analog signal into a signal of an MPEP TS, a CVBS, an SIF L/R, etc.

Here, the IF signal may include any or all of a video signal, an audio signal and a data signal.

Accordingly, th e display apparatus may further include a second signal processing unit besides the IF signal processing unit 120. The second signal processing unit may be included in the IF signal processing unit 120, or may separately exist as a system on chip (SoC). The second signal processing unit divides an IF signal demodulated in the IF demodulating unit 123 into a video signal, an audio signal and a data signal, and the divided video signal and the divided audio signal may be processed in a video signal processing unit (not shown) and an audio signal processing unit (not shown), respectively. Accordingly, the video signal processing unit (not shown) may further include a decoder decoding a signal demodulated by the IF demodulating unit 123, a scaler scaling to be appropriate for the state of the display unit 130, etc. Also, the display apparatus may further include a speaker unit (not shown) for outputting an audio signal processed in the audio signal processing unit.

The display unit 130 displays a signal processed in the IF signal processing unit 120, and may include various display units such as a cathode ray tube (CRT), a liquid crystal display (LCD), a light emitting diode (LED), a plasma display panel (PDP), etc.

If the control unit 140 receives an IF signal from the external tuner 200, the control unit 140 may control the IF signal processing unit 120 to process the received IF signal to be a signal capable of being displayed in the display unit 130.

The user input unit 150 is a user input unit for selecting a channel, and may be provided to the display apparatus as various types such as a button type, a touch panel for a touch screen, a remote controller or a keyboard connected to the display apparatus by wire or wireless, etc.

Accordingly, if a channel selecting signal is received from the user input unit 150, the control unit 140 may control the communicating unit 110 to transmit the received channel selecting signal to the external tuner 200, and may control the communicating unit 110 to receive a video signal corresponding to the transmitted channel selecting signal from the external tuner 200.

FIG. 2 is a configuration block diagram of a display apparatus system according to the second exemplary embodiment.

As shown in FIG. 2, a display apparatus system according to this exemplary embodiment is configured by a display apparatus 100 and an external tuner 200.

The display apparatus 100 is already described above in FIG. 1, and the detail description thereof is omitted.

The external tuner 200 includes a receiving unit 210, a signal converting unit 220 and a communicating unit 230.

The receiving unit 210 is capable of receiving a broadcasting signal transmitted from a broadcaster, and may include an antenna. The broadcasting signal received to the receiving unit 210 is a radio frequency (RF) type.

The signal converting unit 220 includes an IF signal converting unit 221 which may convert an RF signal of a specific channel among RF signals received through the receiving unit 210 into an IF signal. The converted IF signal has the advantage that, due to high selectivity, only a wanted frequency channel can be correctly selected, and high sensitivity minimizes noises or an ill effect of a surrounding circuit and stability can be improved. Accordingly, the RF signal is converted to the IF signal to improve a channel selectivity so that a user can correctly select only a wanted frequency channel.

In the conventional case that there exist a tuner unit in an outside apparatus, a received RF video signal is converted into an IF video signal, and then is converted again into a video signal having a low base band frequency to be transmitted to a TV. However, to convert into the low base band frequency, there is the problem that an analog decoder or a digital decoder is necessary to be disposed in both an external apparatus that includes the tuner unit, as well as the TV.

Accordingly, in the exemplary embodiments, to remove duplicated elements having the same functions, the RF signal is converted into the IF signal, and the converted IF signal is transmitted to the display apparatus without being converted into the low base band frequency. Accordingly, since it is unnecessary that an analog decoder or a digital decoder should be mounted to an external tuner 200 according to this exemplary embodiment, the external tuner 200 can be simplified, and a manufacturing cost thereof can be greatly reduced.

Also, the signal converting unit 220 may further include an analog to digital converter (ADC) 222. The ADC 222 may convert an analog signal to a digital signal. As a broadcasting signal received through the receiving unit 210 is analog, an IF signal converted in the IF signal converting unit 221 is converted into a digital signal in the ADC 222.

Also, the signal converting unit 220 may further include a signal format converting unit 223. The signal format converting unit 223 converts the format of a digital IF signal converted in the ADC 222 into a signal format corresponding to a protocol included in the communicating unit 230. It is not that data of the IF signal, the signal format of which is converted by the signal format converting unit 223 is distorted, but that packeting/packetizing thereof necessary for communication is performed. Accordingly, if the communicating unit 230 includes wired or wireless communication protocols, the signal format converting unit 223 can convert the format of a digital IF signal to correspond to a communication protocol of the communicating unit 230.

The communicating unit 230 performs a communication with the display apparatus 100, and all of a wired communication and a wireless communication are available. I f th e communicating unit 230 performs a wired communication, a cable, a coaxial cable or an optical cable is connected with the display apparatus 100, and a protocol corresponding to the cable, the coaxial cable or the optical cable may be included. Also, if the communicating unit 230 performs a wireless communication, any type of wireless network communication can be available as long as wireless network communication with the external tuner 200 ma y be performed, and a communication protocol corresponding thereto ma y be included. Preferably but not necessarily, as a WLAN communication, the wireless network communication may perform a Wi-Fi communication, and may include a communication protocol corresponding thereto.

Accordingly, th e external tuner according to exemplary embodiment converts an analog RF signal received in the receiving unit 210 into a digital IF signal, and then converts this into a signal format corresponding to a communication protocol of the communicating unit 230 to transmit to the display apparatus 100. Accordingly, the external tuner of the exemplary embodiment can remove the conventional element such as a demodulator/modulator necessary to convert an IF signal into a low base band frequency.

Also, the communicating unit 230 may receive a channel selecting signal of the user input unit 150 of the display apparatus 100. Accordingly, the communicating unit 230 transmits the received channel selecting signal to the receiving unit 210 to receive an RF signal corresponding to the channel selecting signal. Also, the external tuner 200 of the exemplary embodiment may include a control unit (not shown), and the communicating unit 230 may transmit the received channel selecting signal to the control unit, and the control unit may control the receiving unit 210 to receive an RF signal corresponding to the received channel selecting signal.

Accordingly, an RF signal corresponding to the channel selecting signal received to the receiving unit 210 is converted into a digital IF signal via the IF signal converting unit 221, the ADC 222 and the signal format converting unit 223, and the digital IF signal is transmitted to the display apparatus 100 through the communicating unit 230.

Accordingly, if there is no separate control signal receiving unit in the external tuner 200 of the exemplary embodiment, a control signal can be received from the display apparatus 100 through the communicating unit 230.

Also, the external tuner 200 according to the exemplary embodiment may further include a receiving unit (not shown) directly receiving a channel selecting signal from the user input unit 150 of the display apparatus 100.

If the user input unit 150 of the display apparatus 100 is a remote controller connected wirelessly, a user may directly transmit a signal for selecting a channel to the external tuner 200 instead of the display apparatus 100 by using the remote controller, and the external tuner 200 may select a RF signal corresponding to a channel selecting signal received through the receiving unit.

Also, the external tuner 200 of the exemplary embodiment may further include a user input unit (not shown) for selecting a channel. The user input unit may be provided to the external tuner 200 as various types such as a button type, a remote controller connected to the external tuner 200 in wired or in wireless, a keyboard, etc. Accordingly, a user may directly input a signal for a channel selection to the external tuner 200 instead of the display apparatus 100 through the user input unit. Accordingly, the external tuner 200 receiving the channel selecting signal can select an RF signal corresponding to the signal.

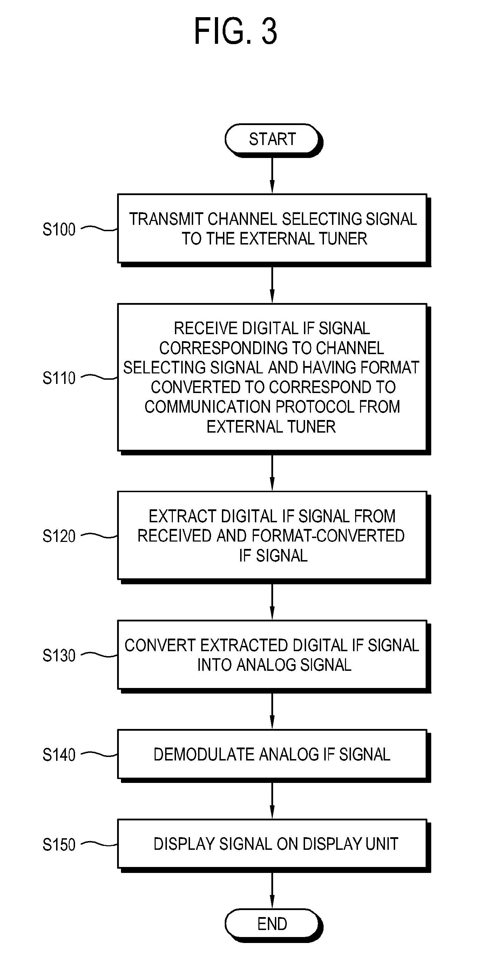

FIG. 3 is a flowchart illustrating a control operation of the display apparatus 100 according to the first exemplary embodiment.

The communicating unit 110 of the display apparatus 100 of the first exemplary embodiment transmits a channel selecting signal received from the user input unit 150 to the external tuner 200 (S100), and receives an IF signal corresponding to the transmitted channel selecting signal from the external tuner 200 (S110). Here, the received IF signal is a digital IF signal, a signal format of which is converted to correspond to a communication protocol of the communicating unit 110. Accordingly, only an IF signal is extracted from the format-converted signal in the signal format converting unit 121 of the IF signal processing unit 120 (S120). The extracted IF signal is a digital signal. Accordingly, the digital IF signal is converted to an analog signal in the DAC 122 (S130). The analog IF signal is demodulated in the IF demodulating unit 123 (S140). The demodulated signal is decoded and scaled in a second signal processing unit (not shown) to be displayed on the display unit 130, and then is displayed on the display unit 130 (S150).

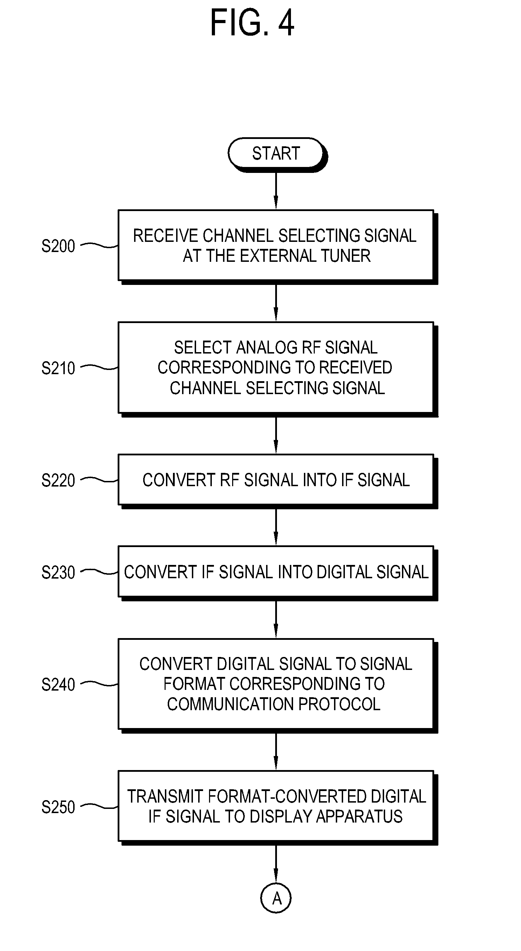

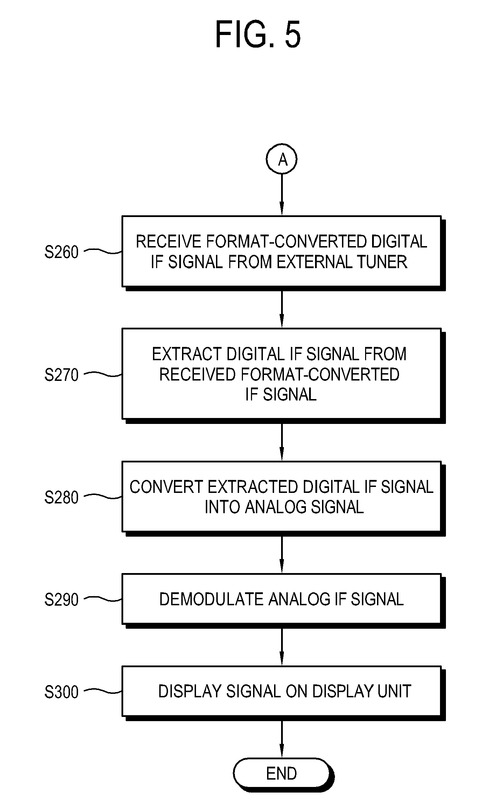

FIGS. 4 and 5 are flowcharts illustrating a control operation of a display apparatus system including the external tuner 200 and the display apparatus 100 according to the second exemplary embodiment.

The external tuner 200 receives a channel selecting signal (S200). The received channel selecting signal may be a channel selecting signal received from the user input unit 150 of the display apparatus 100 and then received through the communicating unit 230 of the external tuner 200. That is, if a channel selecting signal is received from the user input unit 150 of the display apparatus 100 (S200), the control unit 140 of the display apparatus 100 transmits the received channel selecting signal to the external tuner 200 through the communicating unit 110.

Also, the external tuner 200 may include a receiving unit (not shown) directly receiving a channel selecting signal which the user input unit 150 of the display apparatus 100 transmits, and may directly receive the channel selecting signal by the receiving unit. Also, the external tuner 200 may further include a separate user input unit (not shown), and a channel selecting signal may be directly received from the separate user input unit.

The external tuner 200 selects an RF signal corresponding to the received channel selecting signal among received broadcasting signals (S210). The selected RF signal is an analog signal. The selected RF signal is converted into an IF signal in the IF signal converting unit 221 (S220). The converted IF signal is still an analog signal, and is converted to a digital signal in the ADC 222 (S230). The IF signal converted into the digital signal is converted to have a signal format corresponding to a communication protocol of the communicating unit 230 in the signal format converting unit 223 (S240), and this is transmitted to the display apparatus 100 through the communicating unit 230 (S250).

The communicating unit 110 of the display apparatus 100 performs a communication with the communicating unit 230 of the external tuner 200 to receive the format-converted digital IF signal (S260). Only an IF signal is extracted from the format-converted signal in the signal format converting unit 121 of the IF signal processing unit 120 (S270). The extracted IF signal is a digital signal. Accordingly, the digital IF signal is converted into an analog signal in the DAC 122 (S280), and is demodulated in the IF demodulating unit 123 (S290). The demodulated signal is decoded/scaled to be displayable on the display unit 130 in a second signal processing unit (not shown) to be displayed on the display unit 130 (S300).

Also, the exemplary embodiment provides a control method of a display apparatus.

A control method of the exemplary embodiment may include an operation of receiving an IF signal from an external tuner in a communicating unit, an operation of processing the received IF signal in an IF signal processing unit, and an operation of displaying the processed signal in a display unit.

Also, the control method may further include an operation of receiving a channel selecting signal from a user input unit, and an operation of transmitting the received signal to the external tuner in the communicating unit.

Further, the received IF signal may be a signal, a signal format of which is converted to correspond to a communication protocol of the communicating unit, and the signal processing operation may further include an operation of extracting an IF signal from the format-converted signal in a signal format converting unit.

The received IF signal may be a digital signal, and the signal processing operation may further include an operation of converting the digital signal into an analog signal in a DAC.

The signal processing operation may further include an operation of demodulating the IF signal in an IF demodulating unit.

The control method of the exemplary embodiment is already described in the control operation described in FIGs. 3 and 4, and the duplicated description thereof is omitted.

Although a few exemplary embodiments of the present invention have been shown and described, it will be appreciated by those skilled in the art that changes may be made in these exemplary embodiments without departing from the principles of the invention, the scope of which is defined in the appended claims and their equivalents.

Attention is directed to all papers and documents which are filed concurrently with or previous to this specification in connection with this application and which are open to public inspection with this specification, and the contents of all such papers and documents are incorporated herein by reference.

All of the features disclosed in this specification (including an y accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in th i s specification (including any accompanying claims, abstract and drawings), or to any novel one, or any novel combination, of the steps of any method or process so disclosed.

## Claims

1. A display apparatus, comprising:
a communicating unit which performs a communication with an external tuner, and receives an intermediate frequency, IF, signal from the external tuner;
an IF signal processing unit which processes the IF signal received in the communicating unit; and
a control unit which controls the IF signal processing unit to process the received IF signal to be a signal displayable on a display unit if receiving the IF signal from the external tuner.

2. The display apparatus according to claim 1, further comprising a user input unit for selecting a channel,
wherein, if a channel selecting signal is received from the user input unit, the control unit controls the communicating unit to transmit the received channel selecting signal to the external tuner, and to receive an IF signal corresponding to the transmitted channel selecting signal from the external tuner.

3. The display apparatus according to any preceding claim, wherein the IF signal which is received at the communicating unit has a signal format which is converted to correspond to a communication protocol of the communicating unit, and
the IF signal processing unit further comprises a signal format converting unit which extracts the received IF signal from the format-converted signal.

4. The display apparatus according to any preceding claim, wherein the received IF signal is a digital signal, and
the IF signal processing unit further comprises a digital to analog converter, DAC, which converts the digital signal into an analog signal.

5. The display apparatus according to any preceding claim, wherein the IF signal processing unit further comprises an IF demodulating unit which demodulates the IF signal.

6. The display apparatus according to any preceding claim, wherein the display apparatus displays the signal processed in the IF signal processing unit.

7. An external tuner comprising:
a receiving unit which receives a broadcasting signal from a broadcaster;
a signal converting unit which converts the broadcasting signal into a digital IF signal; and
a communication unit which communicates with an external display apparatus to transmit the digital IF signal to the external display apparatus;
wherein the display apparatus processes the transmitted IF and displays the processed IF signal.

8. The external tuner according to claim 7, further comprising a digital to analog converter, DAC, which converts an analog signal into a digital signal.

9. The external tuner according to any one of claims 7 to 8, further comprising a signal format converting unit which converts the processed IF signal to have a signal format corresponding to a communication protocol of the communicating unit.

10. The external tuner according to any one of claims 7 to 9, further comprising a user input unit for selecting a channel, and
a receiving unit which receives a channel selecting signal of the user input unit.

11. A control method of a display apparatus, comprising:
receiving an intermediate frequency (IF) signal from an external tuner in a communicating unit;
processing the received IF signal in an IF signal processing unit; and
displaying the processed signal on a display unit.

12. The control method of the display apparatus according to claim 11, further comprising:
receiving a channel selecting signal from a user input unit, and
transmitting the received signal to the external tuner from the communicating unit.

13. The control method of the display apparatus according to claim 11 or claim 12, wherein the received IF signal has a signal format which is converted to correspond to a communication protocol of the communicating unit, and
the processing the signal further comprises extracting an IF signal from the format-converted signal in a signal format converting unit.

14. The control method of the display apparatus according to any one of claims 11 to 13, wherein the received IF signal is a digital signal, and
the processing th e signal further comprises converting the digital signal into an analog signal in a digital to analog converter, DAC.

15. The control method of the display apparatus according to any one of claims 11 to 14, wherein the processing the signal further comprises demodulating the IF signal in an IF demodulating unit.
